# EUROPÄISCHE PATENTANMELDUNG

(11) **EP 4 741 688 A1**
(43) Veröffentlichungstag der Anmeldung: **13.05.2026**
(21) Anmeldenummer: 25211115.8
(22) Anmeldetag: 24.10.2025
(51) Int. Cl.: F16J 15/06

(54) **DICHTVORRICHTUNG ZUR ANORDNUNG IN EINEM VERBINDUNGSBEREICH EINES KRAFTFAHRZEUGS**

(30) Priorität: 07.11.2024 DE 102024132556
(71) Anmelder: Volkswagen Aktiengesellschaft, 38440 Wolfsburg (DE)
(72) Erfinder: Demmer, Carsten, 38440 Wolfsburg (DE)

(57) **Zusammenfassung**

Eine Dichtvorrichtung (16) umfasst ein Basiselement (22), das einen Boden (23) mit einer Durchgangsöffnung (28) sowie eine Seitenwand (24) aufweist, die sich von dem Boden (23) ausgehend erstreckt und diesen umfangsseitig geschlossen umgibt. Weiterhin umfasst die Dichtvorrichtung (16) einen ersten Dichtring (26), der auf der von der Seitenwand (24) abgewandten Seite des Bodens (23) angeordnet ist und dabei die Durchgangsöffnung (28) umgibt, und einen zweiten Dichtring (27), der an dem von dem Boden (23) beabstandeten Ende der Seitenwand (24) angeordnet. Eine solche Dichtvorrichtung (16) eignet sich vorteilhaft zur Abdichtung einer Verbindungsstelle, an der zwei Komponenten eines Kraftfahrzeugs, insbesondere ein Element einer Bodengruppe und ein Batteriegehäuse (8), miteinander verbunden sind. Zum Verbinden der Komponenten kann ein Verbindungselement (15) genutzt werden, das einen Stützabschnitt (17), der zur vollständigen Anordnung innerhalb eines von der Dichtvorrichtung (16) begrenzten Innenraums (29) eingerichtet ist, einen ersten, von einer ersten Seite des Stützabschnitts (17) ausgehenden Verbindungsabschnitt (18a), der sich durch die Durchgangsöffnung (28) des Bodens (23) der Dichtvorrichtung (16) erstreckt, und einen zweiten, sich von einer zweiten Seite des Stützabschnitts (17) ausgehenden Verbindungsabschnitt (18b) umfasst.

## Beschreibung

Die Erfindung betrifft eine Dichtvorrichtung, eine Kombination einer solchen Dichtvorrichtung und eines Verbindungselements sowie eine Anordnung von zwei verbundenen Komponenten eines Kraftfahrzeugs.

Ein Kraftfahrzeug umfasst üblicherweise eine Vielzahl von Dichtelementen, um unter anderem ein Eindringen von Niederschlagswasser, das auch verunreinigt sein kann, aus der Umgebung in einen Innenraum des Kraftfahrzeugs, in dessen Funktionskomponenten oder in Zwischenräume, die von der Karosserie des Kraftfahrzeugs ausgebildet sind, zu verhindern. Dadurch soll vermieden werden, dass dieses Niederschlagswasser, teilweise aufgewirbelt vom Untergrund, zu Korrosion und/oder Fehlfunktionen führt.

Aufgrund der Vielzahl von Dichtelementen, die in einem Kraftfahrzeug verbaut sind, sollten diese nicht nur eine ausreichende Dichtwirkung aufweisen, sondern auch kostengünstig herstellbar sowie schnell und einfach montierbar sein.

In einem Kraftfahrzeug können auch Dichtvorrichtungen zum Einsatz kommen, die dazu ausgelegt sind, einen Verbindungsbereich, in dem zwei Komponenten des Kraftfahrzeugs beabstandet zueinander angeordnet und mittels eines Verbindungselements verbunden sind, abzudichten. Dadurch soll insbesondere die Verbindungsstelle, d.h. das Verbindungselement sowie die damit zusammenwirkenden Verbindungsabschnitte der Komponenten, vor einem Eindringen von Feuchtigkeit geschützt werden. Da mittels solcher Dichtvorrichtungen der Abstand zwischen den Komponenten überbrückt werden muss, sind diese häufig relativ komplex ausgestaltet sowie aufwändig zu montieren.

Eine solche Dichtvorrichtung ist aus der DE 10 2020 125 308 A1 bekannt. Darin ist ein elektrisches Kraftfahrzeug offenbart, bei dem eine Traktionsbatterie beabstandet unterhalb einer Bodenplatte einer Karosserie des Kraftfahrzeugs befestigt angeordnet ist. Als Befestigungselement dient ein Verschraubungselement, das einen Stützabschnitt umfasst, von dem sich in zueinander entgegengesetzten Richtungen zwei Gewindebolzen erstrecken. Einer dieser Gewindebolzen dient auch als Abstandshalter zwischen der Bodenplatte und einem Gehäusedeckel der Traktionsbatterie. Diesen Gewindebolzen umgibt ein mehrteiliger Dichtring, um ein Abdichten der Verbindungsstelle zu realisieren.

Eine abgedichtete Anbindung einer Traktionsbatterie an eine Bodenplatte eines Kraftfahrzeugs ist auch aus der DE 10 2019 115 452 A1 bekannt.

Der Erfindung liegt die Aufgabe zugrunde, eine vorteilhafte Abdichtung eines Verbindungsbereichs von zwei in dem Verbindungsbereich beabstandet angeordneten und miteinander verbundenen Komponenten eines Kraftfahrzeugs zu entwickeln.

Diese Aufgabe ist bei einer Anordnung gemäß dem Patentanspruch 12 gelöst, die zumindest eine Dichtvorrichtung gemäß dem Patentanspruch 1, vorzugsweise in Kombination mit einem Verbindungselement gemäß dem Patentanspruch 8, umfasst. Bevorzugte Ausgestaltungen dazu sind Gegenstände der weiteren Patentansprüche und ergeben sich aus der nachfolgenden Beschreibung der Erfindung.

Eine erfindungsgemäße Dichtvorrichtung umfasst ein topfförmiges Basiselement, das einen Boden mit einer vorzugsweise zentral gelegenen Durchgangsöffnung sowie eine Seitenwand aufweist, die sich von dem Boden ausgehend erstreckt und diesen umfangsseitig geschlossen umgibt. Weiterhin umfasst die Dichtvorrichtung einen ersten Dichtring, der auf der von der Seitenwand abgewandten Seite des Bodens angeordnet ist und dabei die Durchgangsöffnung umgibt, und einen zweiten Dichtring, der an dem von dem Boden beabstandeten Ende der Seitenwand angeordnet ist.

Eine solche Dichtvorrichtung eignet sich vorteilhaft zur Abdichtung des von dieser und insbesondere von dem Basiselement umschlossenen Innenraums, innerhalb dessen eine Verbindungsstelle angeordnet sein kann, durch die zwei Komponenten miteinander verbunden sind. Dabei ist die Dichtvorrichtung zudem kostengünstig herstellbar sowie einfach montierbar.

Als "Dichtring" wird erfindungsgemäß ein ringförmiges Element verstanden, das konstruktiv dazu eingerichtet ist, eine Dichtwirkung zu erzielen, indem dieses zwischen zwei Kontaktflächen angeordnet und dadurch einen Durchlass zumindest einer Flüssigkeit durch einen Spalt, der zwischen den Kontaktflächen ausgebildet ist, verhindert. Als Dichtring dichtet dieser einen Bereich innerhalb der Ringform gegen einen Bereich außerhalb der Ringform ab. Ein solcher Dichtring kann vorzugsweise teilweise oder vollständig aus einem elastischen Material, insbesondere einem Elastomer, ausgestaltet sein.

Vorzugsweise kann der erste Dichtring und/oder der zweite Dichtring ein handelsüblicher O-Ring sein.

Eine erfindungsgemäße Dichtvorrichtung eignet sich zur Abdichtung einer Verbindungsstelle, an der mindestens zwei Komponenten eines Kraftfahrzeugs miteinander verbunden sind.

Dementsprechend betrifft die Erfindung auch eine solche Anordnung von mindestens zwei Komponenten eines Kraftfahrzeugs, die in einem Verbindungsbereich, innerhalb dessen eine Verbindungsstelle ausgebildet ist, beabstandet zueinander angeordnet sind, wobei in dem Verbindungsbereich eine erfindungsgemäße Dichtvorrichtung angeordnet ist. Dabei liegt der erste Dichtring abdichtend an einer ersten der Komponenten und der zweite Dichtring abdichtend an einer zweiten der Komponenten an.

Die Verbindungsstelle, die zumindest auch innerhalb des von der Dichtvorrichtung und insbesondere dem Basiselement begrenzten Innenraums angeordnet ist, ist dadurch gekennzeichnet, dass an dieser eine (mechanische) Verbindung zwischen den Komponenten vorliegt, wobei die Verbindung den Abstand zwischen den Komponenten überbrückt. Diese Verbindung kann insbesondere mittels mindestens eines beliebig ausgestalteten Verbindungselements bewirkt sein, wobei das Verbindungselement vorzugsweise lösbar oder unlösbar mit der ersten Komponente und/oder der zweiten Komponente verbunden oder verbindbar ist. Alternative Arten einer Verbindung zwischen den Komponenten, wie beispielsweise eine Schweißverbindung, sind jedoch ebenfalls vorteilhaft umsetzbar.

Vorzugsweise kann vorgesehen sein, dass eine der Komponenten, insbesondere die zweite Komponente, ein Element einer Bodengruppe des Kraftfahrzeugs und die andere der Komponenten, insbesondere die erste Komponente, ein Gehäuse einer Batterie, insbesondere einer Traktionsbatterie, des Kraftfahrzeugs ist.

Bei einer Batterie handelt es sich grundsätzlich um einen Speicher für elektrische Energie auf elektrochemischer Basis, bei deren Entladung gespeicherte chemische Energie durch eine elektrochemische Redoxreaktion in elektrische Energie gewandelt wird. Im Kontext der Erfindung werden als Batterien sowohl sogenannte Primärbatterien, die nur für ein einmaliges Entladen und nicht für ein erneutes Laden vorgesehen sind, als auch sogenannte Sekundärbatterien beziehungsweise Akkumulatoren, die für ein mehrfaches Laden vorgesehen und entsprechend ausgelegt sind, verstanden. Ein Laden einer Sekundärbatterie stellt dabei die elektrolytische Umkehrung der bei dem Entladen ablaufenden elektrochemischen Redoxreaktion dar, die durch das Anlegen einer elektrischen Spannung realisiert wird.

Als "Traktionsbatterie" gilt erfindungsgemäß eine Batterie, mittels der mindestens ein elektrischer Traktionsmotors eines elektrischen Kraftfahrzeugs mit der für dessen Betrieb erforderlichen elektrischen Leistung versorgt werden kann. Als "elektrisches Kraftfahrzeug" gilt dabei ein Kraftfahrzeug, das zumindest einen solchen elektrischen Traktionsmotor umfasst, durch den ein alleiniger Antrieb des Kraftfahrzeugs möglich ist. Dabei kann das Kraftfahrzeug ausschließlich den mindestens einen elektrischen Traktionsmotor umfassen ("Elektrofahrzeug") oder der mindestens eine elektrische Traktionsmotor kann zusätzlich zu einer anderen Antriebsvorrichtung, insbesondere einer Brennkraftmaschine, vorgesehen sein ("Hybridfahrzeug").

Das Kraftfahrzeug kann insbesondere ein radbasiertes und nicht schienengebundenes Kraftfahrzeug (vorzugsweise ein PKW oder ein LKW) sein.

Gemäß einer bevorzugten Ausgestaltungsform einer erfindungsgemäße Anordnung umfasst das Verbindungselement einen Stützabschnitt, einen ersten, von einer ersten Seite des Stützabschnitts ausgehenden Verbindungsabschnitt sowie einen zweiten, von einer zweiten Seite des Verbindungselement ausgehenden Verbindungsabschnitt. Die zweite Seite kann dabei vorzugsweise der ersten Seite gegenüber liegen. Der Stützabschnitt ist vorzugsweise derart dimensioniert, dass dieser vollständig innerhalb des von der Dichtvorrichtung begrenzten Innenraums angeordnet ist oder angeordnet werden kann, wobei sich dann der erste Verbindungsabschnitt durch die Durchgangsöffnung des Bodens des Basiselements der Dichtvorrichtung erstreckt oder erstrecken kann. Der zweite Verbindungsabschnitt kann vorzugsweise ebenfalls aus dem Basiselement herausragen.

Die Erfindung betrifft auch eine Kombination einer erfindungsgemäßen Dichtvorrichtung und eines solchen Verbindungselements.

Der erste Verbindungsabschnitt und/oder der zweite Verbindungsabschnitt können vorzugsweise als Gewindebolzen (mit Außen- und/oder Innengewinde) ausgestaltet sein, wodurch eine einfach montierbare sowie wieder lösbare Verbindung zwischen den Komponenten ausgebildet werden kann.

Gemäß einer bevorzugten Ausgestaltungsform einer erfindungsgemäßen Kombination kann vorgesehen sein, dass der Stützabschnitt des Verbindungselements derart dimensioniert ist, dass dieser zumindest dann nicht durch die Durchgangsöffnung in dem Boden des Basiselements der Dichtvorrichtung hindurchgeführt werden kann, wenn das Verbindungselement die Komponenten verbindet. Hierzu kann der Stützabschnitt eine Umfangsabmessung (d.h. eine den Umfang beeinflussende Größe, z.B. mindestens einen Durchmesser) aufweisen, die größer als eine entsprechende Umfangsabmessung der Durchgangsöffnung der Dichtvorrichtung ist. Auf diese Weise kann die Dichtvorrichtung beziehungsweise konkret der Boden des Basiselements und der daran angeordnete erste Dichtring mittels des Stützabschnitts an die erste der miteinander verbundenen oder zu verbindenden Komponenten angedrückt werden, wenn der erste Verbindungsabschnitt des Verbindungselements mit der ersten Komponente verbunden wird. Dadurch kann sich ein Verbinden der zwei Komponenten vereinfachen, weil die Dichtvorrichtung bereits nach einem Verbinden des Verbindungselements mit der ersten Komponente lagegesichert ist. Weiterhin kann dadurch ermöglicht werden, einen definierten Druck auf den ersten Dichtring auszuüben, um eine sichere Abdichtung eines Spalts, der zwischen dem Boden und der ersten Komponente ausgebildet ist, mittels des ersten Dichtrings zu bewirken, ohne dass dazu auch der zweite Dichtring belastet werden müsste. Diese Belastung kann dadurch auch unabhängig von einem Druck eingestellt werden, der auf den zweiten Dichtring infolge einer Verbindung des zweiten Verbindungsabschnitts des Verbindungselements mit der zweiten Komponente wirkt. Demnach kann der Druck auf die zwei Dichtringe unabhängig voneinander eingestellt werden.

Um ein Einbringen des Stützabschnitts des Verbindungselements in den von dem Basiselement begrenzten Innenraum zu ermöglichen, kann das von dem Boden beabstandete Ende der Seitenwand des Basiselements eine Durchgangsöffnung begrenzen, die entsprechend größer als der Stützabschnitt ist. Alternativ dazu kann diese Öffnung aber auch kleiner als der Stützabschnitt des Verbindungselements dimensioniert sein, so dass die Dichtvorrichtung und das Verbindungselement dann eine lose zusammenhängende Einheit ausbilden, die im Rahmen einer Montage vorteilhaft handhabbar sein kann.

Gemäß einer bevorzugten Ausgestaltungsform kann vorgesehen sein, dass eine Höhe des Stützabschnitts des Verbindungselements derart bemessen ist, dass durch diese ein vorgesehener Abstand zwischen den Komponenten an der Verbindungsstelle eingestellt ist, indem das Stützelement an der zweiten Komponente anliegt. Hierzu kann insbesondere vorgesehen sein, dass eine Höhe des Stützabschnitts des Verbindungselements einer Höhe des von der Dichtvorrichtung begrenzten Innenraums entspricht. Als Höhe wird dabei die Erstreckung entlang der kürzesten Verbindung zwischen den Komponenten an der Verbindungsstelle verstanden. Dadurch kann der Stützabschnitt des Verbindungselements als Anschlag dienen, durch den der Abstand zwischen den Komponenten definiert wird und/oder wodurch eine definierte Komprimierung des zweiten Dichtrings bei einem Verbinden des Verbindungselements mit der zweiten Komponente gewährleistet werden kann.

Gemäß einer bevorzugten Ausgestaltungsform einer erfindungsgemäßen Dichtvorrichtung kann vorgesehen sein, dass der zweite Dichtring auf der von dem Boden abgewandten Seite eines Kragens des Basiselements angeordnet ist, der sich ringförmig geschlossen von der Seitenwand ausgehend erstreckt. Dabei kann der Kragen insbesondere außenseitig der Seitenwand angeordnet sein, wodurch ein relativ großer zweiter Dichtring mit einer vorteilhaften Dichtwirkung zum Einsatz kommen kann. Insbesondere bei beengten Platzverhältnissen in dem Verbindungsbereich kann aber auch vorgesehen sein, dass der Kragen innenseitig der Seitenwand angeordnet ist.

Gemäß einer weiteren bevorzugten Ausgestaltungsform einer erfindungsgemäßen Dichtvorrichtung kann vorgesehen sein, dass der Boden und/oder der Kragen (jeweils) eine umlaufende Vertiefung ausbildet/ausbilden, in der der (jeweils) zugeordnete Dichtring angeordnet ist. Dadurch kann eine Anordnung der Dichtringe an einer dafür jeweiligen vorgesehenen Position gewährleistet werden, wodurch eine sichere Abdichtung mittels der Dichtringe gewährleistet werden kann. Durch eine solche Lagesicherung für den oder die Dichtringe kann zudem eine vereinfachte Montage der Dichtvorrichtung erreicht werden. Weiterhin bevorzugt kann dann noch vorgesehen sein, dass die Querschnittsform der (jeweiligen) Vertiefung an die Außenkontur des (jeweiligen) Dichtrings angepasst ist, d.h. dem angrenzenden Abschnitt der Außenkontur entspricht. Zudem kann vorgesehen sein, dass eine Höhe der Vertiefung derart dimensioniert ist, dass diese einer definiert vorgesehenen Höhe des Dichtrings entspricht, wenn dieser bei ausgebildeter Verbindung zwischen den Komponenten deformiert ist. Dadurch kann erreicht werden, dass der Boden und/oder der Kragen des Basiselements an der angrenzenden Komponente anliegt, wenn diese bestimmungsgemäß miteinander verbunden sind, wobei der entsprechende Dichtring zudem definiert deformiert ist, um eine sichere Dichtwirkung aufzuweisen und gleichzeitig nicht überlastet zu werden.

Gemäß einer weiteren bevorzugten Ausgestaltungsform einer erfindungsgemäßen Dichtvorrichtung kann vorgesehen sein, dass das Basiselement einstückig ausgestaltet ist, so dass gewährleistet ist, dass dieses selbst keine Undichtigkeit aufweist oder ein zusätzlicher Aufwand, der für das Abdichten einer oder mehrerer Verbindungsstellen bei einem mehrstückigen Basiselement anfallen könnte, entfallen kann. Dementsprechend kann weiterhin bevorzugt vorgesehen sein, dass das Basiselement nahtlos ausgestaltet ist und demnach keine Nahtstelle aufweist.

Gemäß einer vorteilhaften Ausgestaltungsform einer erfindungsgemäßen Dichtvorrichtung kann vorgesehen sein, dass das Basiselement aus Kunststoff und/oder aus Metall, beispielsweise aus einem Stahl, ausgestaltet ist. Weiterhin bevorzugt kann das Basiselement durch Urformen und/oder Umformen hergestellt worden sein.

Die Erfindung wird nachfolgend anhand eines in den Zeichnungen dargestellten Ausgestaltungsbeispiels näher erläutert. In den Zeichnungen zeigt, teilweise in vereinfachter Darstellung:
- Fig. 1:: eine Bodengruppe eines Kraftfahrzeugs mit zwei erfindungsgemäßen Anordnungen;

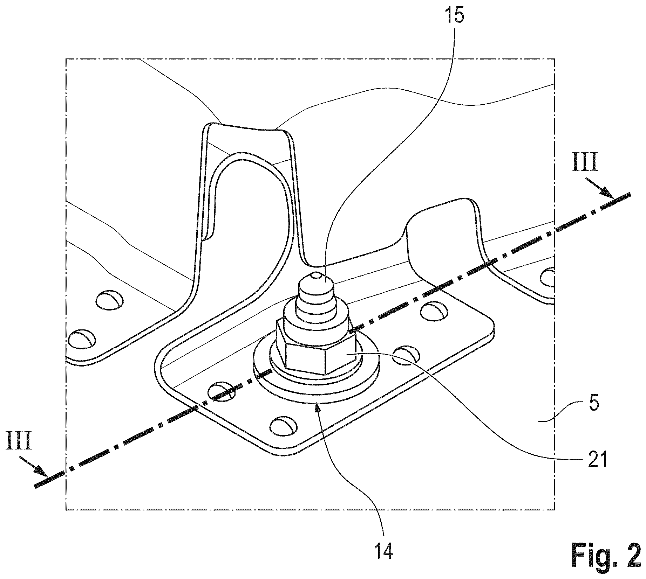

- Fig. 2:: den in der Fig. 1 mit II gekennzeichneten Abschnitt in vergrößerter Darstellung;
- Fig. 3:: einen Vertikalschnitt durch die Bodengruppe entlang der Schnittlinie III - III in der Fig. 2;
- Fig. 4:: eine Traktionsbatterie des Kraftfahrzeugs in isolierter Darstellung

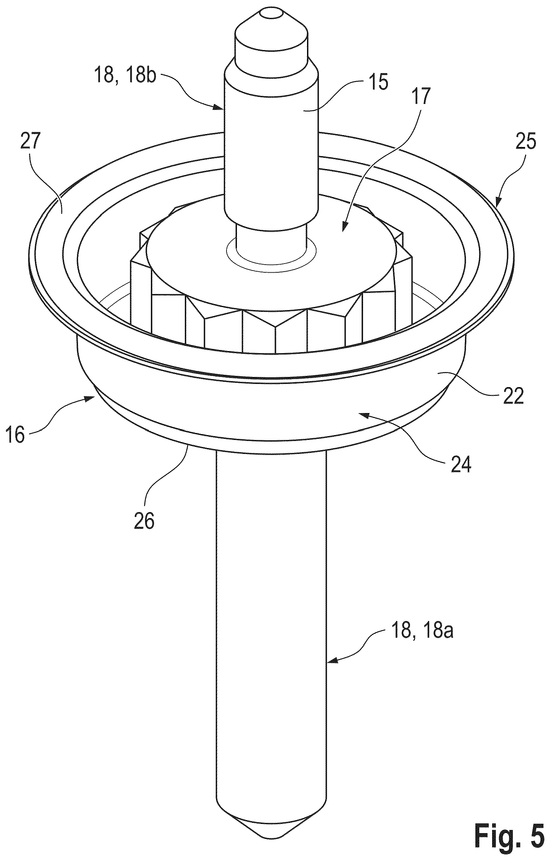

- Fig. 5:: eine Kombination einer Dichtvorrichtung und eines Verbindungselements der Anordnung in isolierter Darstellung;

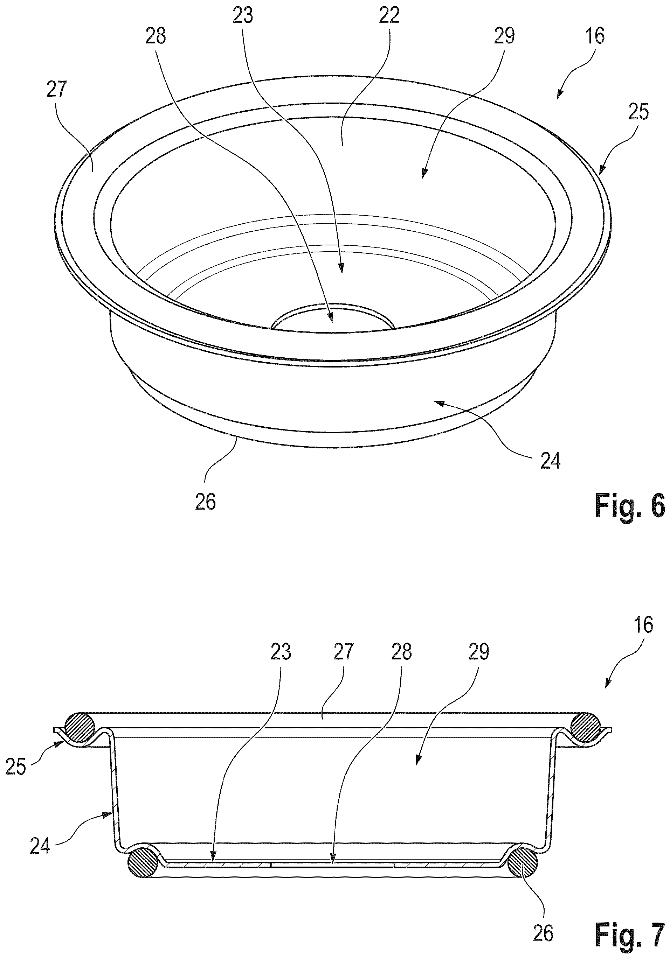

- Fig. 6:: die Dichtvorrichtung in isolierter Darstellung und
- Fig. 7:: einen Radialschnitt durch die Dichtvorrichtung.

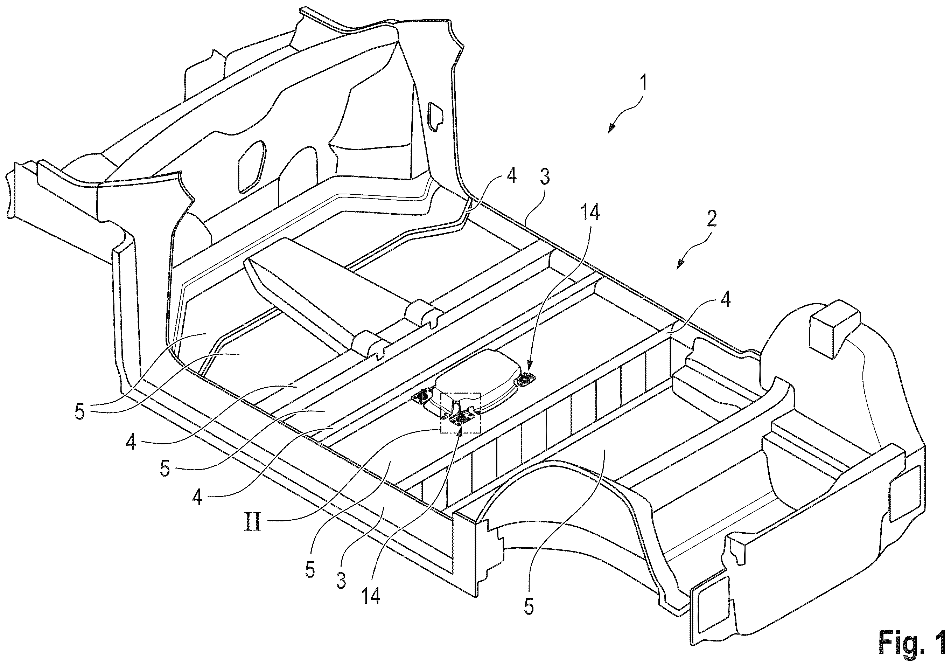

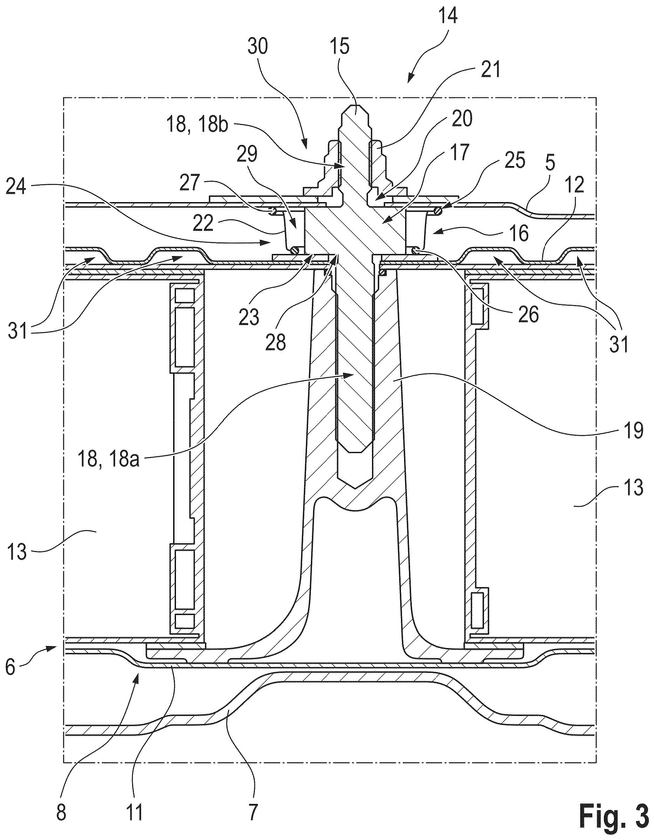

Die Fig. 1 zeigt eine Bodengruppe 1, die ein Teil einer Karosserie für ein elektrisches Kraftfahrzeug ist. Die Bodengruppe 1 stellt bekanntermaßen unter anderem Befestigungspunkte für Komponenten eines Fahrwerks und eines Antriebsstrangs des Kraftfahrzeugs bereit und diese kann zumindest teilweise aus umgeformten Metallblechen gefertigt sein. Der Abschnitt der Bodengruppe, der zwischen zwei Achsen des Kraftfahrzeugs angeordnet ist, wird nachfolgend als Zwischenboden 2 bezeichnet. Dieser Zwischenboden 2 ist unter anderem von Längsträgern 3, Querträgern 4 und Bodenplatten 5 ausgebildet, wobei diese Komponenten einen Aufnahmeraum (nicht sichtbar) begrenzen, der für die Aufnahme einer Traktionsbatterie 6 des Kraftfahrzeugs vorgesehen ist. Dieser Aufnahmeraum und damit die Traktionsbatterie 6 liegen unterhalb der Bodenplatten 4 des Zwischenbodens 2, wobei unterhalb der Traktionsbatterie 6 zudem noch eine als Unterfahrschutz 7 dienende, flächige Karosseriestruktur angeordnet ist (vgl. Fig. 3).

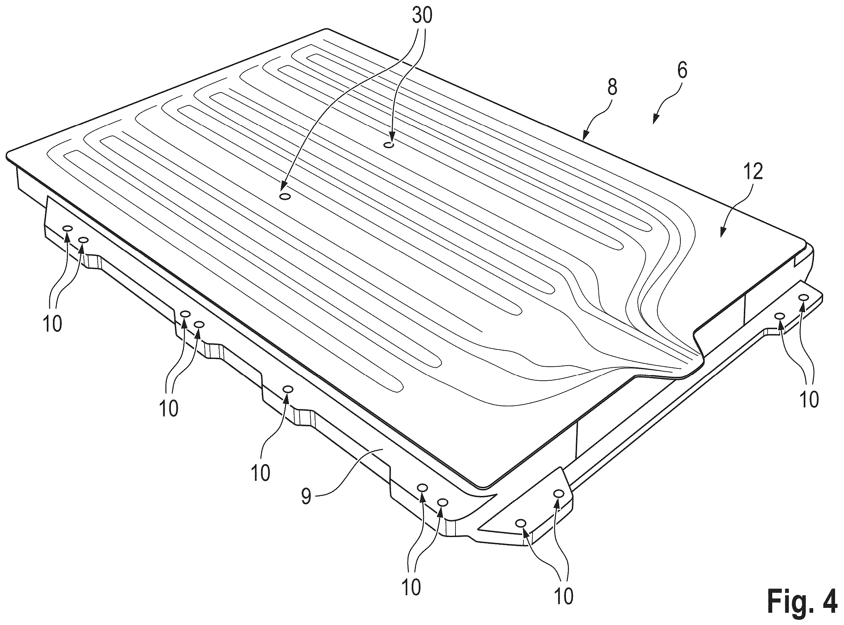

Die Traktionsbatterie 6 ist in der Fig. 4 isoliert dargestellt. Diese weist ein Batteriegehäuse 8 auf, das einen Gehäuserahmen 9 umfasst, der Verbindungsöffnungen 10 ausbildet, über die der Gehäuserahmen 9 und damit das Batteriegehäuse 8 mit unter anderem den Längsträgern 3 des Zwischenbodens 2 verbunden sind beziehungsweise werden können. Das Batteriegehäuse 8 umfasst weiterhin noch einen Gehäuseboden 11 (vgl. Fig. 3) sowie einen Gehäusedeckel 12. In diesen Gehäusedeckel 12 sind Temperierkanäle 31 (vgl. Fig. 3) integriert, durch die eine Temperierflüssigkeit zirkulieren kann, um ein Temperieren der Traktionsbatterie 6 zu ermöglichen. Innerhalb des Batteriegehäuses 8 sind eine Vielzahl von Batteriezellen 13 (vgl. Fig. 3) angeordnet, die elektrisch miteinander verschaltet sind, um im Verbund (als Traktionsbatterie 6) einem elektrischen Traktionsmotor (nicht dargestellt) des Kraftfahrzeugs eine ausreichend große elektrische Leistung für einen Antrieb des Kraftfahrzeugs zur Verfügung stellen zu können.

Die Traktionsbatterie 6 ist zusätzlich zu der Verbindung über den Gehäuserahmen 9 über zwei Schraubverbindungen 14, die in einem zentralen Bereich des Gehäusedeckels 12 angeordnet sind, mit der daran angrenzenden Bodenplatte 5 verbunden. Diese Schraubverbindungen 14 dienen primär dazu, die Formstabilität der großflächigen und ansonsten im Wesentlichen nur randseitig beziehungsweise über den Gehäuserahmen 9 befestigten Traktionsbatterie 6 zu gewährleisten. Dabei sollen insbesondere auch Deformationen der Traktionsbatterie 6, die sich anderenfalls aufgrund von dynamischen Lasten während eines Fahrbetriebs des Kraftfahrzeugs ergeben könnten, vermieden werden.

Aufgrund der mittigen Anordnung der zwei Schraubverbindungen 14 bezüglich der Traktionsbatterie 6 ist deren Ausbildung im Rahmen einer Montage des Kraftfahrzeugs relativ kompliziert umzusetzen. Weiterhin ist unter anderem in den (Verbindungs-)Bereichen 30 des Zwischenbodens 2, in denen die Schraubverbindungen 14 jeweils vorliegen, ein relativ großer Abstand zwischen der Oberseite der Traktionsbatterie 6 und der Unterseite der angrenzenden Bodenplatte 5 vorhanden. Dieser Abstand wird von den Schraubverbindungen 14 überbrückt und soll zudem durch die Schraubverbindungen 14 unveränderlich gehalten werden. Hinzu kommt, dass der Spalt zwischen der Traktionsbatterie 6 und den angrenzenden Bodenplatten 5 zur Umgebung des Kraftfahrzeugs nicht vollständig abgedichtet ist, so dass in diesen Feuchtigkeit und auch größere Mengen an Flüssigkeit, insbesondere Niederschlagswasser, das üblicherweise auch Verunreinigungen, wie beispielsweise Tausalz, umfassen kann, eindringen kann. Der relativ große Abstand zwischen der Traktionsbatterie 6 und den angrenzenden Bodenplatten dient zumindest auch dazu, eine ausreichende Durchströmung des entsprechenden Spalts durch Luft und damit ein Trocknen von dort vorhandener Feuchtigkeit zu ermöglichen. Dennoch müssen die Schraubverbindungen 14 gegen ein Eindringen von Feuchtigkeit und sonstigen Verunreinigungen geschützt beziehungsweise abgedichtet werden, um diese dauerhaft vor Korrosion zu schützen.

Um dies zu realisieren ist in jedem der Verbindungsbereiche 30 eine Kombination aus einem Verbindungselement 15 und einer Dichtvorrichtung 16 angeordnet. Die Verbindungselemente 15 umfassen jeweils einen annähernd zylindrischen Stützabschnitt 16. Von den beiden Stirnseiten des Stützabschnitts 17 erstreckt sich jeweils in senkrechter Ausrichtung ein Verbindungsabschnitt 18 in Form eines Gewindebolzen 18 mit Außengewinde. Die Verbindungsabschnitte 18 weisen im Vergleich zu dem Stützabschnitt 17 jeweils einen relativ kleinen Durchmesser auf, wobei der Durchmesser eines ersten Verbindungsabschnitts 18a größer als derjenige eines zweiten Verbindungsabschnitts 18b ist. Die Zeichnungen zeigen einteilige Verbindungselemente 15. Es besteht auch die Möglichkeit, diese mehrteilig auszugestalten. Beispielsweise kann der Stützabschnitt 17 mehrteilig ausgestaltet sein, indem einer erster Teil des Stützabschnitts 17 einteilig mit den Verbindungsabschnitten 18 ausgeführt ist, während ein zweiter Teil des Stützabschnitts 17 in Form eines separaten, ringförmigen Bauteils ausgeführt ist, das auf einen der Verbindungsabschnitte 18 aufgesteckt ist.

Der erste Verbindungsabschnitt 18a ist in eine Gewindeaufnahme 19 der Traktionsbatterie 6 eingeschraubt. Für ein solches Einschrauben und auch bedarfsweise für ein Lösen der entsprechenden Schraubverbindung 14 weist der Stützabschnitt 17 an seiner Mantelfläche eine Funktionsstruktur mit Vorsprüngen auf, an denen ein Werkzeug zum Aufbringen eines Moments angreifen kann. Der zweite Verbindungsabschnitt 18b erstreckt sich durch eine Durchgangsöffnung 20 in der angrenzenden Bodenplatte 5, wobei auf der von der Traktionsbatterie 6 abgewandten Seite dieser Bodenplatte 5 eine Gewindemutter 21 auf den als Gewindebolzen ausgebildeten zweiten Verbindungsabschnitt 18b aufgeschraubt ist. Diese Ausgestaltung ermöglicht die abschließende Ausbildung der Schraubverbindungen 14 durch das Aufschrauben der Gewindemuttern 21 erst nach dem Einbringen der Traktionsbatterie 6 in den hierfür vorgesehenen Aufnahmeraum der Bodengruppe 1, wobei die Verbindungselemente 15 und über diese auch die zugehörigen Dichtvorrichtungen 16 bereits mit der Traktionsbatterie 6 verbunden sind, wenn die Traktionsbatterie 6 in die Bodengruppe 1 integriert wird.

Die Dichtvorrichtungen 16 umfassen jeweils ein topfförmiges Basiselement 22, das zur Aufnahme des Stützabschnitts 17 des zugeordneten Verbindungselements 15 eingerichtet und hierzu einen entsprechend dimensionierten Innenraum 29 begrenzt. Die Basiselemente 22, die jeweils einstückig und nahtlos durch beispielsweise Tiefziehen aus einem Metallblech hergestellt wurden, umfassen jeweils einen Boden 23, der zur Anlage an dem Gehäusedeckel 12 der Traktionsbatterie 6 vorgesehen ist, sowie eine sich annähernd senkrecht von dem Boden 23 erstreckende Seitenwand 24, die den Boden 23 umfangsseitig geschlossen umgibt, wobei die Seitenwand 24 an dem von dem Boden 23 beabstandeten Ende in einen außenseitig angeordneten Kragen 25 übergeht, der sich ringförmig geschlossen um die Seitenwand 24 erstreckt. Ein erster Dichtring 26 in Form eines O-Rings ist auf der von der Seitenwand 24 abgewandten Seite des Bodens 23 angeordnet und dabei in einer geschlossen ringförmig umlaufenden Vertiefung angeordnet, deren Vertiefungsquerschnitt an die Außenkontur des (ersten) Dichtrings 26 angepasst ist. **In** gleicher Weise ist ein zweiter Dichtring 27 in Form eines O-Ring auf der von dem Boden 23 abgewandten Seite des Kragens 25 angeordnet und dabei in einer geschlossen ringförmig umlaufenden Vertiefung des Kragens 25 angeordnet, deren Vertiefungsquerschnitt ebenfalls an die Außenkontur des (zweiten) Dichtrings 27 angepasst ist.

Der Boden 23 bildet eine zentrale Durchgangsöffnung 28 aus, durch die sich der erste Verbindungsabschnitt 18a des zugeordneten Verbindungselements 15 erstreckt, wobei der Durchmesser dieser Durchgangsöffnung 28 kleiner als der Durchmesser des Stützabschnitts 17 des Verbindungselements 15 ist. Dadurch ist der Boden 23 der Dichtvorrichtung 16 zwischen dem Stützabschnitt 17 des zugeordneten Verbindungselements 15 und dem Gehäusedeckel 12 des Batteriegehäuses 8 fixiert angeordnet, wobei der Spalt zwischen dem Boden 23 der Dichtvorrichtung 16 und dem Gehäusedeckel 12 des Batteriegehäuses 8 jeweils durch den ersten Dichtring 26 abgedichtet ist.

Nach der Integration der Traktionsbatterie 6 in den dafür vorgesehenen Aufnahmeraum der Bodengruppe 1 kontaktiert der jeweilige zweite Dichtring 27 der Dichtvorrichtungen 16 die Unterseite der angrenzenden Bodenplatte 5, so dass die entsprechende Verbindungsstelle beziehungsweise Schraubverbindung 14, die von dem Verbindungselement 15 in Kombination mit der Gewindeaufnahme 19 der Traktionsbatterie 6 einerseits und der Gewindemutter 21 andererseits ausgebildet ist, vollständig gegenüber der Umgebung (in dem Spalt zwischen der Bodenplatte 5 und der Traktionsbatterie 6) abgedichtet ist.

Eine definierte Deformation des zweiten Dichtrings 27 wird jeweils durch das Aufschrauben der zugeordneten Gewindemutter 21 erreicht, wobei der Stützabschnitt 17 des zugeordneten Verbindungselements 15 als Anschlag für diese Verschraubung dient. Hierzu wird die Gewindemutter 21 jeweils so weitgehend angezogen, dass die durch diese belastete Bodenplatte 5 gegen den Stützabschnitt 17 gedrückt wird, der wiederum über den Boden 23 des Basiselements 22 der Dichtvorrichtung 16 an dem Gehäusedeckel 12 der Traktionsbatterie 6 abgestützt ist. Die Höhe des Stützabschnitts 17 entspricht dabei jeweils zumindest annähernd der Höhe des von dem Basiselement 22 der Dichtvorrichtung 16 begrenzten Innenraums 29. Ein diesbezüglich exaktes Gleichmaß ist bereits aufgrund einer gewissen Elastizität bezüglich dieser Höhenrichtung, die das Basiselement 22 aufweist, nicht erforderlich.

### Bezugszeichenliste

- 1: Bodengruppe
- 2: Zwischenboden
- 3: Längsträger
- 4: Querträger
- 5: Bodenplatte
- 6: Traktionsbatterie
- 7: Unterfahrschutz
- 8: Batteriegehäuse
- 9: Gehäuserahmen
- 10: Verbindungsöffnung
- 11: Gehäuseboden
- 12: Gehäusedeckel
- 13: Batteriezelle
- 14: Schraubverbindung
- 15: Verbindungselement
- 16: Dichtvorrichtung
- 17: Stützabschnitt
- 18: Verbindungsabschnitt
- 18a: erster Verbindungsabschnitt
- 18b: zweiter Verbindungsabschnitt
- 19: Gewindeaufnahme
- 20: Durchgangsöffnung einer Bodenplatte
- 21: Gewindemutter
- 22: Basiselement
- 23: Boden des Basiselements
- 24: Seitenwand des Basiselements
- 25: Kragen des Basiselements
- 26: erster Dichtring
- 27: zweiter Dichtring
- 28: Durchgangsöffnung des Bodens
- 29: Innenraum
- 30: Verbindungsbereich
- 31: Temperierkanal

## Patentansprüche

1. Dichtvorrichtung (16) mit einem Basiselement (22), das einen Boden (23) mit einer Durchgangsöffnung (28) sowie eine Seitenwand (24) aufweist, die sich von dem Boden (23) ausgehend erstreckt und diesen umfangsseitig geschlossen umgibt, und mit einem ersten Dichtring (26), der auf der von der Seitenwand (24) abgewandten Seite des Bodens (23) angeordnet ist und dabei die Durchgangsöffnung (28) umgibt, und einem zweiten Dichtring (27), der an dem von dem Boden (23) beabstandeten Ende der Seitenwand (24) angeordnet ist.

2. Dichtvorrichtung (16) gemäß Anspruch 1, **dadurch gekennzeichnet, dass** der zweite Dichtring (27) auf der von dem Boden (23) abgewandten Seite eines Kragens (25) angeordnet ist, der sich ringförmig geschlossen von der Seitenwand (24) ausgehend erstreckt.

3. Dichtvorrichtung (16) gemäß Anspruch 2, **dadurch gekennzeichnet, dass** der Kragen (25) außenseitig der Seitenwand (24) angeordnet ist.

4. Dichtvorrichtung (16) gemäß einem der vorhergehenden Ansprüche, **dadurch gekennzeichnet, dass** das Basiselement (22) einstückig ausgestaltet ist.

5. Dichtvorrichtung (16) gemäß einem der vorhergehenden Ansprüche, **dadurch gekennzeichnet, dass** das Basiselement (22) aus Kunststoff und/oder aus Metall ausgestaltet ist.

6. Kombination einer Dichtvorrichtung (16) gemäß einem der vorhergehenden Ansprüche und eines Verbindungselements (15), das einen Stützabschnitt (17), der zur vollständigen Anordnung innerhalb eines von der Dichtvorrichtung (16) begrenzten Innenraums (29) eingerichtet ist, einen ersten, von einer ersten Seite des Stützabschnitts (17) ausgehenden Verbindungsabschnitt (18a), der sich durch die Durchgangsöffnung (28) des Bodens (23) der Dichtvorrichtung (16) erstreckt oder erstrecken kann, und einen zweiten, sich von einer zweiten Seite des Stützabschnitts (17) ausgehenden Verbindungsabschnitt (18b) umfasst.

7. Kombination gemäß Anspruch 8, **dadurch gekennzeichnet, dass** der erste Verbindungsabschnitt (18a) und/oder der zweite Verbindungsabschnitt (18b) als Gewindebolzen ausgestaltet ist/sind.

8. Kombination gemäß Anspruch 8 oder 9, **dadurch gekennzeichnet, dass** der Stützabschnitt (17) des Verbindungselements (15) eine Umfangsabmessung aufweist, die größer als eine Umfangsabmessung der Durchgangsöffnung (28) der Dichtvorrichtung (16) ist.

9. Kombination gemäß einem der Ansprüche 8 bis 10, **dadurch gekennzeichnet, dass** eine Höhe des Stützabschnitts (17) des Verbindungselements (15) einer Höhe des von der Dichtvorrichtung (16) begrenzten Innenraums (29) im Wesentlichen entspricht.

10. Anordnung von mindestens zwei Komponenten eines Kraftfahrzeugs, die in einem Verbindungsbereich (30), innerhalb dessen eine Verbindungsstelle ausgebildet ist, beabstandet zueinander angeordnet sind, **dadurch gekennzeichnet, dass** in dem Verbindungsbereich (30) eine Dichtvorrichtung (16) gemäß einem der Ansprüche 1 bis 7 angeordnet ist, wobei die Verbindungsstelle innerhalb des Basiselements (22) der Dichtvorrichtung (16) angeordnet ist und wobei der erste Dichtring (26) abdichtend an einer ersten der Komponenten und der zweite Dichtring (27) abdichtend an einer zweiten der Komponenten anliegt.

11. Anordnung gemäß Anspruch 12, **dadurch gekennzeichnet, dass** die Komponenten mittels eines Verbindungselements (15) einer Kombination gemäß einem der Ansprüche 8 bis 11 miteinander verbunden sind.

12. Anordnung gemäß Anspruch 13, **dadurch gekennzeichnet, dass** eine Höhe des Stützabschnitts (17) des Verbindungselements (15) derart bemessen ist, dass durch diesen ein definierter Abstand zwischen den Komponenten an der Verbindungsstelle eingestellt ist.

13. Anordnung gemäß einem der Ansprüche 12 bis 14, **dadurch gekennzeichnet, dass** eine der Komponenten ein Element einer Bodengruppe (1) des Kraftfahrzeugs und eine andere der Komponenten ein Batteriegehäuse (8) einer Batterie (6) des Kraftfahrzeugs ist.
